# EUROPÄISCHE PATENTANMELDUNG

(11) **EP 1 224 962 A2**
(43) Veröffentlichungstag der Anmeldung: **24.07.2002**
(21) Anmeldenummer: 02001202.7
(22) Anmeldetag: 16.01.2002
(51) Int. Cl.: B01D 3/36

(54) **Verfahren zur Trennung azeotroper Gemische**

(30) Priorität: 17.01.2001 DE 10101942
(71) Anmelder: BASF AKTIENGESELLSCHAFT, 67056 Ludwigshafen (DE)
(72) Erfinder: Burst, Wolfram, 68199 Mannheim (DE); Kaibel, Gerd, 68623 Lampertheim (DE); Kuntze, Thomas, 67459 Boehl-Iggelheim (DE); König, Josef, 67308 Zellertal 1 (DE)
(74) Vertreter: Kinzebach, Werner, Dr.

(57) **Zusammenfassung**

Beschrieben wird ein Verfahren zur Trennung eines flüssigen Gemisches wenigstens zweier ein Azeotrop miteinander bildender Komponenten A und B und gegebenenfalls weiterer Komponenten, bei dem man (i) das zu trennende Gemisch in Gegenwart eines Hilfsstoffs H destilliert, welcher mit jeder der beiden Komponenten A und B ein niedriger als H siedendes binäres Azeotrop AH bzw. BH bildet, und (ii) eine gegenüber dem zu trennenden Gemisch B-abgereicherte A,H enthaltende Fraktion und eine gegenüber dem zu trennenden Gemisch A-abgereicherte B,H enthaltende Fraktion gewinnt.

## Beschreibung

Die vorliegende Erfindung betrifft ein Verfahren zur Trennung eines flüssigen Gemisches wenigstens zweier ein Azeotrop miteinander bildender Komponenten.

In chemischen Verfahren fallen häufig flüssige Gemische an, die aus zwei oder mehreren Komponenten bestehen. Eine Auftrennung dieser Gemische dient z. B. der Veredelung von Rohstoffen, der Weiterverarbeitung von Zwischenprodukten, der Abtrennung von Wertstoffen usw. Ein klassisches Trennverfahren ist die Destillation bzw. Rektifikation. Komponenten, die ein Azeotrop miteinander bilden, lassen sich durch einfache Destillation bzw. Rektifikation jedoch nicht voneinander trennen, da am azeotropen Punkt Flüssigkeit und Dampf dieselbe Zusammensetzung haben.

Im Stand der Technik sind verschiedene Verfahren zur Trennung azeotroper Gemische beschrieben. Eine ausführliche Zusammenfassung findet man beispielsweise bei E.-U. Schlünder und F. Thurner in "Destillation, Absorption, Extraktion", Thieme Verlag, Stuttgart, 1986.

Bei der Zweidruckrektifikation macht man von der Tatsache Gebrauch, dass die Lage des azeotropen Punktes im Allgemeinen druckabhängig ist und betreibt zwei Kolonnen bei unterschiedlichem Druck. Die Rektifikation eines die Komponenten A, B enthaltenden Gemisches in der ersten Kolonne bewirkt eine Trennung in die schwererflüchtige Komponente B als Sumpfprodukt und ein Azeotrop (AB) als Kopfprodukt, das in die zweite Kolonne überführt wird. Durch Erhöhung oder Erniedrigung des Drucks in der zweiten Kolonne lässt sich der azeotrope Punkt verschieben, und man erhält die reine Komponente A als Rückstand und ein Azeotrop (AB), das in die erste Kolonne zurückgeführt wird.

Mittels Heteroazeotrop-Rektifikation können Gemische zweier Komponenten getrennt werden, deren Azeotrop eine Zusammensetzung aufweist, die innerhalb einer Mischungslücke der Komponenten liegt. Zunächst trennt man das Gemisch in einer ersten Kolonne in die schwererflüchtige Komponente B als Sumpfprodukt und in ein Gemisch mit nahezu azeotroper Zusammensetzung als Kopfprodukt. Beim Kondensieren zerfällt das Kopfprodukt in einem Phasentrennbehälter aufgrund der Mischungslücke in zwei Phasen. Die A-arme Phase wird in die erste Kolonne zurückgeführt. Die A-reiche Phase wird einer zweiten Kolonne zugeführt, die bei gleichem Druck wie die erste Kolonne betrieben wird, wo die Komponente A als Sumpfprodukt anfällt. Das am Kopf abgezogene Azeotrop wird nach Kondensation ebenfalls dem Phasentrennbehälter zurückgeführt.

Bei der Extraktiv-Rektifikation nimmt man einen schwerflüchtigen Hilfsstoff zu Hilfe, der selektiv eine der Gemischkomponenten an sich bindet und so die relative Flüchtigkeit des Gemisches verändert.

Unter der Azeotrop-Rektifikation versteht man ebenfalls eine Rektifikation unter Zuhilfenahme eines Hilfsstoffes, aber im Gegensatz zur Extraktiv-Rektifikation unterscheidet sich der Siedepunkt des Hilfsstoffes kaum von denen der Gemischkomponenten. Der Hilfsstoff bewirkt die Bildung eines tiefsiedenden Dreistoffazeotrops, so dass man in einer ersten Kolonne die reine Komponente A als Sumpfprodukt und das azeotrope Dreistoffgemisch als Kopfprodukt erhalten kann. Dieses zerfällt nach Kondensation in eine Hilfsstoff-reiche Phase, die man wieder in die erste Säule zurückführt, und eine Hilfsstoff-arme Phase. Die Hilfsstoff-arme Phase kann durch weitere Rektifikation in das ternäre Azeotrop als Kopfprodukt, das nach Kondensation wieder den Phasenabscheider zugeführt wird, und ein binäres Gemisch von A und B als Sumpfprodukt getrennt werden. Letzeres kann in einer dritten Trennsäule in das Sumpfprodukt B und in das Kopfprodukt, das binäre Azeotrop AB, aufgetrennt werden.

Für bestimmte Trennaufgaben, etwa die Trennung von Chlorkohlenwasserstoffen und C₃-C₈-Alkanolen, sind die bekannten Verfahren nur bedingt praktikabel. So führt die Zersetzung der Chlorkohlenwasserstoffe unter Bildung von Chlorwasserstoff bei der Zweidruckdestillation zu erheblichen Korrosionsproblemen. Auch sind bei temperaturabhängigen Stoffen der Wahl der Destillationstemperaturen Grenzen gesetzt. Der vorliegenden Erfindung liegt daher die Aufgabe zu Grunde, ein weiteres, insbesondere verfahrenstechnisch einfaches und wirtschaftliches Verfahren zur Trennung azeotroper Gemische anzugeben.

Diese Aufgabe wird erfindungsgemäß durch ein Verfahren zur Trennung eines flüssigen Gemisches wenigstens zweier ein Azeotrop miteinander bildender Komponenten A und B und gegebenenfalls weiterer Komponenten gelöst, bei dem man
i) das zu trennende Gemisch in Gegenwart eines Hilfsstoffs H destilliert, welcher mit jeder der beiden Komponenten A und B ein niedriger als H siedendes binäres Azeotrop AH bzw. BH bildet, und
ii) eine gegenüber dem zu trennenden Gemisch B-abgereicherte A,H enthaltende Fraktion und eine gegenüber dem zu trennenden Gemisch A-abgereicherte B,H enthaltende Fraktion gewinnt.

Das zu trennende Gemisch enthält wenigstens zwei ein Azeotrop miteinander bildende Komponenten A und B. Die Vorteile des erfindungsgemäßen Verfahrens kommen dann besonders zum Tragen, wenn es sich bei dem Azeotrop AB nicht um ein Heteroazeotrop handelt, d. h. wenn die Komponenten A und B entweder vollständig miteinander mischbar sind oder die Zusammensetzung des Azeotrops AB außerhalb einer Mischungslücke von A und B liegt. Das zu trennende Gemisch kann neben den Komponenten A und B weitere Komponenten C etc. enthalten. Die weiteren Komponenten können mit A und/oder B weitere Azeotrope bilden.

Der Hilfsstoff H muss mit jeder der beiden Komponenten A und B ein niedriger als H siedendes binäres Azeotrop AH bzw. BH bilden. Die Azeotrope AH und BH unterscheiden sich zumindest bei dem gewählten Druck, bei dem die Destillation erfolgt, in ihren Siedepunkten. Die A,H enthaltende und die B,H enthaltende Fraktion können entweder gasförmig, z. B. als gasförmiges Kopfprodukt einer Kolonne, oder flüssig, z. B. als flüssiger Seitenabzug einer Kolonne, gewonnen werden. Eine gasförmig gewonnene Fraktion weist in der Regel annähernd die Zusammensetzung des Azeotrops AH bzw. BH auf; die Zusammensetzung einer flüssig gewonnenen Fraktion kann von der Azeotrop-Zusammensetzung abweichen; sie ist aber in der Regel so, dass sie gemäß Zustandsdiagramm mit dem gasförmigen Azeotrop koexistent ist. Man erhält so eine gegenüber dem zu trennenden Gemisch B-abgereicherte A,H enthaltende Fraktion als niedrigsiedende Fraktion, eine gegenüber dem zu trennenden Gemisch A-abgereicherte B,H enthaltende Fraktion als mittelsiedende Fraktion oder umgekehrt und meist eine im Wesentlichen aus H bestehende Fraktion als hochsiedende Fraktion. Die Begriffe "niedrig-", "mittel-" oder "hochsiedend" sollen lediglich die relative Flüchtigkeit der genannten Fraktionen zueinander angeben. Selbstverständlich können, insbesondere wenn das zu trennende Gemisch weitere Komponenten enthält, weitere Fraktionen gewonnen werden, deren Flüchtigkeit höher, niedriger oder zwischen der der genannten Fraktionen ist.

In vielen Fällen ist eine Komponente, z. B. die Komponente A, mit dem Hilfsstoff nicht oder kaum mischbar (d. h. die Löslichkeit der Komponente in H beträgt z. B. weniger als 5 g/L), während die andere Komponente, z. B. die Komponente B vollständig oder in weiten Bereichen mit dem Hilfsstoff mischbar ist (d. h. die Löslichkeit der Komponente in H beträgt z. B. mehr als 100 g/L). Sofern das zu trennende Gemisch noch weitere Komponenten enthält, lassen sich diese rein, im Gemisch untereinander, gegebenenfalls zusammen mit dem Azeotrop A,H bzw. B,H oder als Azeotrop mit H isolieren, was von den Verhältnissen im Einzelfall abhängt.

Überraschenderweise lässt sich das erfindungsgemäße Verfahren auch dann erfolgreich ausüben, wenn der Hilfsstoff H mit den Komponenten A und B ein ternäres Azeotrop zu bilden vermag.

Das erfindungsgemäße Verfahren eignet sich besonders zur Trennung eines Gemisches, das eine unter Chlorkohlenwasserstoffen, vorzugsweise mit einer molaren Masse von wenigstens 84 g/mol, und C₆-C₁₀-Einkernaromaten ausgewählte erste Komponente und eine unter C₃-C₈-Alkanolen ausgewählte zweite Komponente umfasst. Als Hilfsstoff dient in diesen Fällen Wasser. Als geeignete C₃-C₈-Alkanole lassen sich n-Propanol, Isopropanol, n-Butanol, sec-Butanol, i-Butanol, n-Hexanol, Cyclohexanol und Octanol aufzählen. Zu den geeigneten C₆-C₁₀-Einkernaromaten zählen Benzol, Toluol und die Xylole. Bevorzugte Beispiele für Chlorkohlenwasserstoffe sind Butylchlorid, Methylenchlorid, Trichlormethan, Tetrachlormethan, Dichlorethan, Trichlorethylen und Perchlorethylen.

Besonders geeignet ist das Verfahren zur Trennung eines Gemisches von Perchlorethylen und n-Butanol, das gegebenenfalls Butylchlorid enthält. Ein solches Gemisch fällt z. B. bei einem Verfahren zur Herstellung von L-Ascorbinsäure an, bei dem man 2-Keto-L-gulonsäurebutylester in Perchlorethylen als Lösungsmittel lactonisiert.

Sofern das zu trennende Gemisch Chlorkohlenwasserstoffe enthält, versetzt man zur Verhinderung von Korrosion den Hilfsstoff Wasser zweckmäßigerweise mit einer Base. Man stellt den pH-Wert des Wassers auf einen Wert im Bereich von 7,5 bis 12, vorzugsweise 8,5 bis 10,5 ein. Beispiele für geeignete Basen sind Alkali- oder Erdalkalihydroxide wie Natrium-, Kalium-, Magnesium- oder Calciumhydroxid, vorzugsweise Natriumhydroxid, Alkali- oder Erdalkalicarbonate wie Natrium-, Kalium-, Magnesium- oder Calciumcarbonate, oder Alkalihydrogencarbonate wie Natrium- oder Kaliumhydrogencarbonat.

Das erfindungsgemäße Verfahren kann chargenweise oder kontinuierlich durchgeführt werden. Bei chargenweiser Durchführung wird das zu trennende Gemisch mit dem Hilfsstoff versetzt und destilliert, wobei die gesamte Hilfsstoffmenge zu Beginn der Destillation zugegeben werden kann oder der Hilfsstoff während der Destillation laufend oder periodisch ergänzt wird. Nach Kondensation der Brüden fängt man Fraktionen auf, wobei die A,H enthaltende Fraktion und die B,H enthaltende Fraktion zeitlich nacheinander anfallen. Dies ist für die Trennung großer Mengen oder stetig anfallender Mengen des zu trennenden Gemisches jedoch unwirtschaftlich.

In einer bevorzugten Ausführungsform des Verfahrens speist man das zu trennende Gemisch zur Destillation kontinuierlich in die Kolonne ein. Für die Trennung geeignete Kolonnen sind dem Fachmann wohl bekannt. Zur Erhöhung des gegenseitigen Kontaktes zwischen aufströmendem Dampf und abwärts fließender Flüssigkeit enthält die Kolonne übliche Einbauten. Hierzu zählen Einbauten wie strukturierte Packungen, Füllkörper, beispielsweise Raschig-Ringe, Pall-Ringe, Sattel oder Kugelformen, oder Böden, beispielsweise Sieb-, Glocken-, Tunnel- oder Ventilböden oder ähnlich gestaltete Böden. Vorzugsweise verwendet man Glocken- oder Tunnelböden. Die Größe der Kolonne richtet sich nach den jeweiligen Durchsatzmengen.

Zweckmäßigerweise führt man den Hilfsstoff zumindest teilweise gemeinsam mit dem zu trennenden Gemisch in die Kolonne ein. Alternativ oder zusätzlich gibt man in einer bevorzugten Ausführungsform der Erfindung den Hilfsstoff H zumindest teilweise am Kopf und/oder im oberen Bereich, d. h. oberhalb des zugabeortes des zu trennenden Gemisches, der Kolonne auf, vorzugsweise oberhalb des Abzugs der niedrigsiedenden, A,H enthaltenden Fraktion. Der in der Kolonne aufsteigende Dampf und der herablaufende Hilfsstoff werden auf diese Weise im Gegenstrom geführt. Durch diese Verfahrensführung kann die Bildung eines ternären Azeotrops ABH zurückgedrängt oder unterdrückt werden, welches niedriger als die binären Azeotrope AH und BH siedet und dessen Auftreten den Trennerfolg beeinträchtigen könnte.

Die A,H enthaltende und die B,H enthaltende Fraktion werden geeigneterweise als Seitenabzüge gewonnen, wobei die niedriger siedende Fraktion auch als Kopfprodukt abgezogen werden kann, wenn das zu trennende Gemisch keine weiteren, noch niedriger siedende Komponenten enthält.

Der Hilfsstoff H fällt regelmäßig als Sumpfprodukt an. Zweckmäßigerweise führt man den Hilfsstoff von dort an den Kopf und/oder in den oberen Bereich der Säule zurück.

Üblicherweise beträgt der Massenstrom des am Kopf oder im oberen Bereich der Kolonne aufgegebenen Hilfsstoffs H das 0,5- bis 15fache des Massenstroms des zu trennenden Gemisches, bezogen auf den von H verschiedenen Anteil, vorzugsweise das 3- bis 9fache, insbesondere das 4- bis 8fache und ganz besonders bevorzugt das 4-bis 6,5fache.

In einer bevorzugten Ausführungsform führt man das zu trennende Gemisch seitlich in die Kolonne an einer Stelle zwischen dem Sumpf und dem Kopf ein, und man entnimmt die A,H enthaltende Fraktion an einer Stelle oberhalb und die B,H enthaltende Fraktion an einer Stelle unterhalb des Zugabeortes des zu trennenden Gemisches. Bei einer solchen Ausführungsform wird die niedriger siedende A,H enthaltende Fraktion im unteren Teil der Kolonne, der als Abtriebssäule fungiert, ausgetrieben und im oberen Teil der Kolonne, der als Verstärkungssäule fungiert, angereichert.

Vorteilhafterweise bildet der Hilfsstoff H mit der reinen Komponente A und/oder der reinen Komponente B, vorzugsweise mit beiden, jeweils ein Heteroazeotrop, d. h. die Zusammensetzung des Azeotrops AH bzw. des Azeotrops BH liegt in einer Mischungslücke der Komponente A bzw. B mit dem Hilfsstoff. Für diesen Fall zerfällt die A,H enthaltende Fraktion bzw. die B,H enthaltende Fraktion beim Kondensieren in zwei Phasen. Nach der Phasentrennung erhält man eine A- bzw. B-reiche Phase und eine H-reiche Phase, wobei man letztere zweckmäßigerweise wieder zurück in die Kolonne führt. Im günstigsten Fall ist die Reinheit der A- bzw. B-reichen Phase so hoch, dass man die Komponente A bzw. B ohne weitere Reinigung verwenden kann. Andernfalls kann man die A- bzw. B-reiche Phase weiteren Trennverfahrenn, z. B. einer weiteren Destillation, Stripping, Extraktion, Membrantrennverfahren usw. unterwerfen.

Zur Phasentrennung eignen sich die im Stand der Technik bekannten Vorrichtungen, wie beispielsweise Schwerkraftabscheider, Zentrifungen oder Hydrozyklone. Vorzugsweise verwendet man Dekanter.

In der Ausführungsform der Erfindung, in der es sich bei dem zu trennenden Gemisch um ein solches von Perchlorethylen und n-Butanol handelt, das gegebenenfalls Butylchlorid enthält und das unter Zuhilfenahme von Wasser als Hilfsstoff getrennt wird, treten folgende Heteroazeotrope (in der Reihenfolge abnehmender Siedepunkte) auf: n-Butanol/Wasser, Perchlorethylen/Wasser und gegebenenfalls Butylchlorid/Wasser. Bei der Durchführung des Verfahrens in einer Kolonne zieht man daher zweckmäßigerweise eine n-Butanol/Wasser-Fraktion als flüssigen Seitenabzug im unteren Bereich der Kolonne, eine Perchlorethylen/Wasser-Fraktion als flüssigen Seitenabzug im oberen Bereich der Kolonne und eine Butylchlorid/Wasser-Fraktion als gasförmiges Kopfprodukt ab.

Man unterwirft die n-Butanol/Wasser-Fraktion zweckmäßigerweise einer Phasentrennung in eine n-Butanol-reiche Phase und eine wasserreiche Phase, wobei letztere vorteilhafterweise wieder in die Kolonne zurückgeführt wird. Die n-Butanol-Phase kann gegebenenfalls in einer zweiten Kolonne destillativ in eine n-Butanol-angereicherte Fraktion und eine n-Butanol-abgereicherte Fraktion aufgetrennt werden. Die zweite Kolonne wird bevorzugt auf gleichem Druckniveau wie die erste Kolonne betrieben.

Aufgrund der ausgeprägten Mischungslücke von Perchlorethylen und Wasser zerfällt die Perchlorethylen/Wasser-Fraktion in eine wässrige Phase, die man vorteilhafterweise wieder zurück in die Kolonne führt, und in eine Perchlorethylen-Phase von hoher Reinheit von regelmäßig über 95 Gew.-%, die man aus dem System entfernt.

Butylchlorid bildet mit Wasser ein Heteroazeotrop. Nach Kondensation der gasförmigen Butylchlorid/Wasser-Fraktion und Phasentrennung führt man die wässrige Phase wieder zurück in die Kolonne. Die Butylchlorid-Phase kann aus dem System entfernt werden. Gegebenenfalls enthält das zu trennende Gemisch noch weitere leichtflüchtige Komponenten, wie beispielsweise Aceton, die ebenfalls im Kopfprodukt anfallen. Sofern diese Verbindungen auch wasserlöslich sind, wird man zweckmäßigerweise einen Teil der wässrigen Phase ausschleusen, um eine Aufpegelung der leichtflüchtigen Komponente im System zu verhindern.

Im Sumpf der Kolonne sammelt sich das als Hilfsstoff verwendete Wasser, wovon ein Strom abgezogen und am Kopf und/oder im oberen Bereich der Kolonne aufgegeben wird. Durch diese Verfahrensführung lässt sich die Bildung des ternären Azeotrops Butanol/Perchlorethylen/Wasser zurückdrängen bzw. unterdrücken.

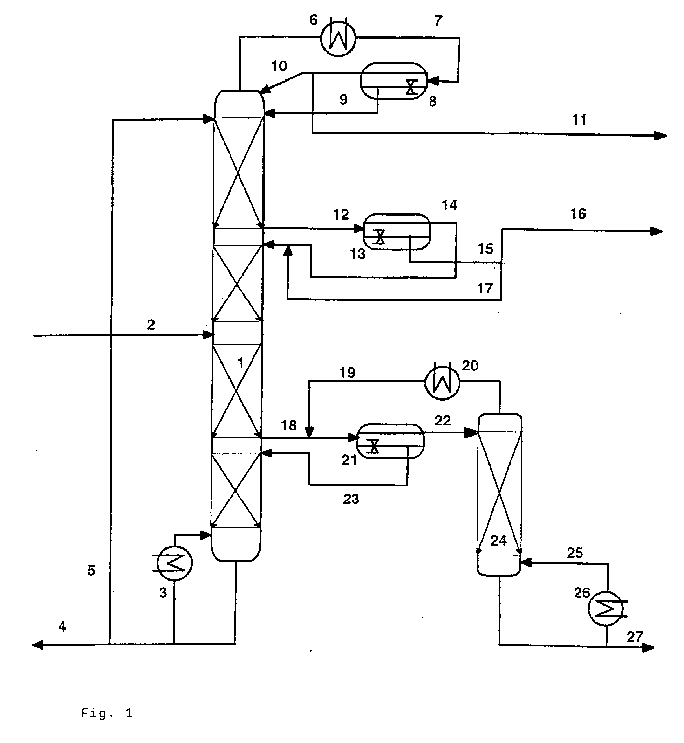

Eine zur Durchführung des erfindungsgemäßen Verfahrens geeignete Anlage ist in Fig. 1 dargestellt und wird im Folgenden erläutert.

Fig. 1 zeigt eine schematische Darstellung eines zur Durchführung des erfindungsgemäßen Verfahrens geeignete Anlage am Beispiel der Trennung eines flüssigen Gemisches von n-Butanol/Perchlorethylen/Butylchlorid unter Zuhilfenahme von Wasser als Hilfsstoff. Das zu trennende Gemisch kann z. B. aus etwa 10 bis 80 Gew.-%, insbesondere 20 bis 60 Gew.-% 1-Butanol, vorzugsweise etwa 20 bis 90 Gew.-%, insbesondere 40 bis 80 Gew.-% Perchlorethylen und bis zu 50 Gew.-%, insbesondere bis zu 20 Gew.-% Wasser bestehen.

Gemäß Fig. 1 wird in die Kolonne (1) das zu trennende Flüssigkeitsgemisch kontinuierlich über die Leitung (2) eingespeist. Aus dem Sumpf der Kolonne (1), der in üblicher Art und Weise mit einem Verdampfer (3) verbunden ist, entnimmt man Wasser, das anschließend über Leitung (5) zum Kopf der Kolonne (1) geführt wird. Überschüssige Wassermengen lassen sich über Leitung (4) aus der Kolonne (1) entfernen. Üblicherweise enthält der Sumpf weniger als 2 Gew.-%, vorzugsweise unter 200 ppm 1-Butanol.

Über den Seitenabzug (12) wird aus dem Verstärkungsteil der Kolonne (1) ein flüssiges Perchlorethylen-Wasser-Gemisch entnommmen, das üblicherweise etwa 5 bis 30 Gew.-%, vorzugsweise 10 bis 20 Gew.-% Perchlorethylen, weniger als 5 Gew.-%, vorzugsweise weniger als 1 Gew.-% 1-Butanol und weniger als 5 Gew.-%, vorzugsweise weniger als 2 Gew.-% Butylchlorid enthält. Das Gemisch wird einem Phasenscheider (13) zugeführt. Die wässrige Phase wird über Leitung (14) wieder zurück in die Kolonne (1) geführt. Die im Phasenscheider (13) anfallende Perchlorethylen-Phase wird über Leitung (16) aus dem System entfernt. In Abhängigkeit von der gewünschten Produktreinheit führt man einen gewissen Anteil der abgetrennten Perchlorethylen-Phase über Leitung (17) wieder in die Kolonne (1) zurück.

Aus dem Seitenabzug (18) des Abtriebsteil der Kolonne (1) gewinnt man ein Gemisch, das im Wesentlichen aus 1-Butanol und Wasser besteht. Üblicherweise beträgt der Butanolanteil in diesem Gemisch 2 bis 25 Gew.-%, vorzugsweise 5 bis 15 Gew.-%. Ferner enthält das Gemisch höchstens 5 Gew.-%, vorzugsweise höchstens 1 Gew.-% Perchlorethylen sowie höchstens 1 Gew.-%, vorzugsweise höchstens 0,5 Gew.-% Butylchlorid. Man führt das Gemisch einem Phasenscheider (21) zu. Die im Phasenscheider (21) anfallende wässrige Phase wird über Leitung (23) wieder zur Kolonne (1) zurückgeführt. Die Butanol-Phase wird über Leitung (22) einer zweiten Trennsäule (24) zugeführt und dort aufgearbeitet.

Aus dem Kopfraum der Kolonne(1) entnimmt man einen gasförmigen Strom, der annährend die azeotrope Konzentration des Systems Butylchlorid-Wasser aufweist. Der Strom wird im Kondensator (6) kondensiert und über Leitung (7) einem Phasenscheider (8) zugeführt. Die wässrige Phase wird über Leitung (9) wieder in die Kolonne (1) zurückgeführt. Die wässrige Phase enthält noch Spuren von Perchlorethylen sowie weniger als 2 Gew.-%, vorzugsweise weniger als 0,5 Gew.-% 1-Butanol. Die im Phasenscheider (8) anfallende Butylchlorid-Phase wird zum einen über Leitung (11) aus dem System entfernt und zum anderen teilweise über Leitung (10) wieder in die Kolonne (1) zurückgeführt. Die Butylchlorid-Phase besteht üblicherweise zu wenigstens 60 Gew.-%, vorzugsweise zu wenigstens 90 Gew.-% und insbesondere zu wenigstens 95 Gew.-% aus Butylchlorid.

Typische Betriebsbedingungen für die erste Trennkolonne (1) sind: etwa 0,1 bar bis 2 bar, vorzugsweise 0,8 bar bis 1,2 bar Kopfdruck, etwa 5 °C bis 105 °C, vorzugsweise 50 °C bis 90 °C Kopftemperatur, etwa 45 °C bis 130 °C, vorzugsweise 90 °C bis 120 °C Sumpftemperatur. Die Kolonne weist eine theoretische Stufenzahl von etwa 10 bis 70 Stufen, vorzugsweise 15 bis 60 Stufen und insbesondere etwa 20 bis 50 Stufen auf. Die im Sumpfverdampfer eingetragene Heizleistung hängt naturgemäß von der eingesetzten Wassermenge (5) und der Menge und der Zusammensetzung des organischen Zulaufs ab. Üblicherweise wendet man pro eingesetzte Tonne Wasser eine Energie von 15 bis 50 kW, vorzugsweise 25 bis 45 kW und insbesondere 30 bis 45 kW und pro Tonne organischem Zulauf eine Energie von 90 bis 200 kW, vorzugsweise 100 bis 150 kW und insbesondere 105 bis 120 kW auf.

Die im Phasenscheider (21) abgetrennte n-Butanol-Phase besteht im Wesentlichen aus n-Butanol und Wasser. Üblicherweise beträgt der Wasseranteil etwa 10 bis 40 Gew.-%, vorzugsweise etwa 15 bis 30 Gew.-%. Die Butanol-Phase wird über Leitung (22) am Kopf einer zweiten Trennsäule (24) aufgegeben. Am Sumpf der Kolonne (24), der in üblicher Weise über Leitung (25) mit einem Verdampfer (26) verbunden ist, entnimmt man über Leitung (27) n-Butanol von hoher Reinheit. Üblicherweise liegt der Wassergehalt im n-Butanol unter 0,1 Gew.-%, vorzugsweise sogar unter 200 ppm. Das Kopfprodukt der zweiten Trennsäule (24) wird im Kondensator (20) kondensiert und vollständig über Leitung (19) zum Phasenscheider (21) zurückgeführt. Es weist vorteilhafterweise eine annährend azeotrope Konzentration auf. Der Wassergehalt liegt im Bereich von 35 bis 50 Gew.-%, vorzugsweise im Bereich von 38 bis 48 Gew.-%, was vom Energieeintrag in die Kolonne abhängt.

Vorzugsweise betreibt man die zweite Trennsäule (24) auf gleichem Druckniveau wie die erste Trennsäule (1). Die zweite Trennsäule (24) kann aber auch bei höherem Druck als die erste Trennsäule betrieben werden, um über die Druckabhängigkeit des Azeotrops am Kopf der zweiten Säule eine Erhöhung des Wasseranteils zu erzielen. Auf diese Weise lässt sich die Butanolausschleusung am Kolonnensumpf optimieren. Die Druckdifferenz zwischen beiden Säulen beträgt bis zu 2 bar, vorzugsweise bis zu 0,8 bar. Die Kolonne (24) wird bei einer Kopftemperatur von 40 °C bis 120 °C, vorzugsweise von 55 °C bis 100 °C und einer Sumpftemperatur von 60 °C bis 145 °C, vorzugsweise von 110 °C bis 130 °C betrieben. Die Trennsäule (24) enthält die vorstehend beschriebenen Einbauten, vorzugsweise Gewebepackungen. Die Größe der Trennsäule (24) richtet sich naturgemäß nach den jeweiligen Durchsätzen. Die Kolonne (24) weist eine theoretische Stufenzahl von 3 bis 20 Stufen, vorzugsweise 5 bis 15 Stufen und insbesondere 7 bis 12 Stufen auf.

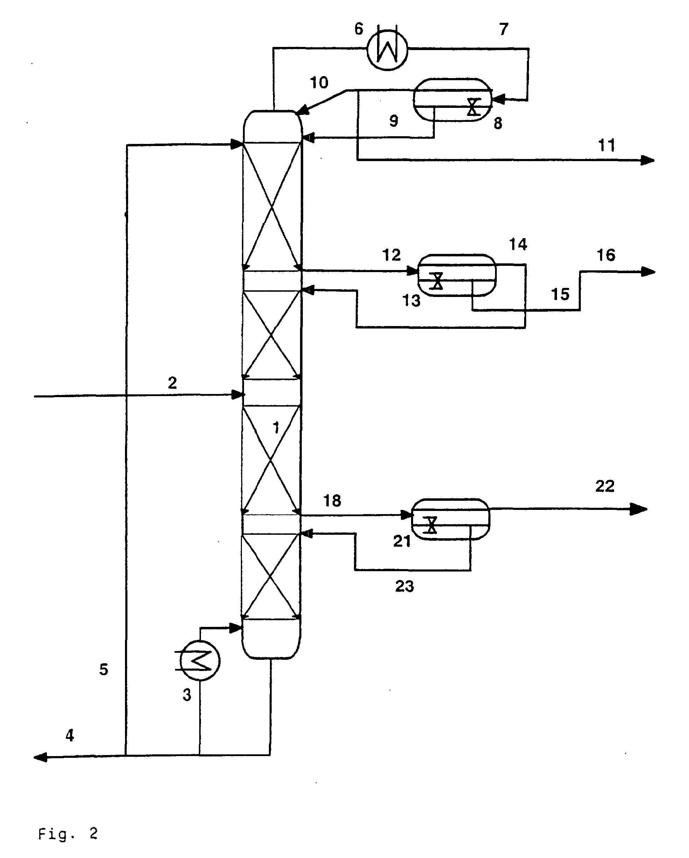

Fig. 2 zeigt ebenfalls eine Anlage zur Durchführung des erfindungsgemäßen Verfahrens. Gleiche Bezugszeichen haben die gleiche Bedeutung wie in Fig. 1. Im Unterschied zu Fig. 1 erfolgt keine destillative Aufarbeitung der n-Butanol-Phase in einer zweiten Kolonne. Außerdem entfällt die Rückführung eines Teils der Perchlorethylen-Phase.

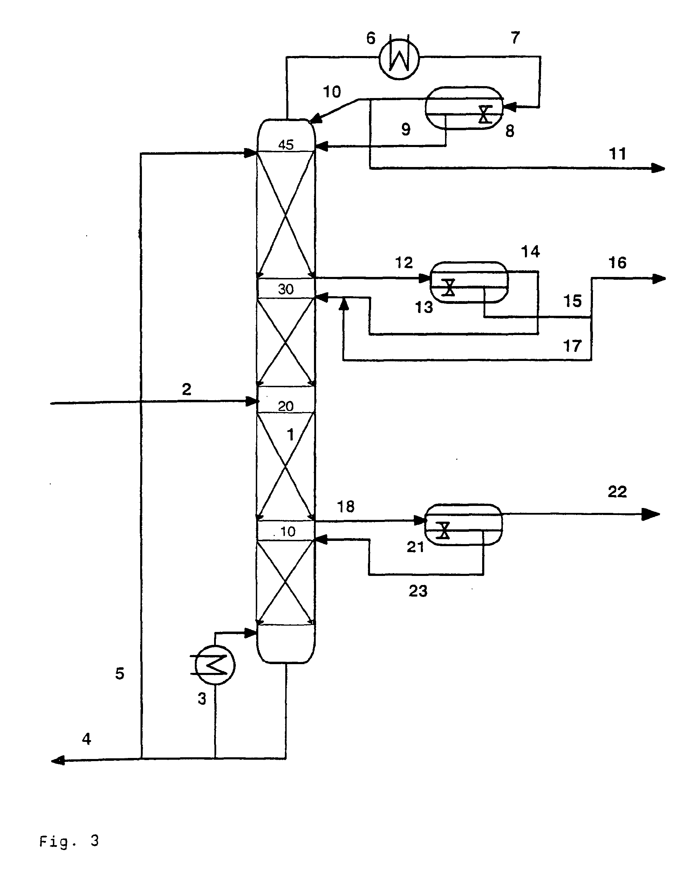

Fig. 3 zeigt eine weitere Anlage zur Durchführung des erfindungsgemäßen Verfahrens. Gleiche Bezugszeichen haben die gleiche Bedeutung wie in Fig. 1. Im Unterschied zu Fig. 1 verzichtet man auf die destillative Aufarbeitung der n-Butanol-Phase in einer zweiten Kolonne.

Die folgenden Beispiele sollen die Erfindung näher erläutern, ohne sie zu begrenzen.

### Beispiel 1

Es wurde eine Anlage verwendet, wie sie in Fig. 2 dargestellt ist.

Der Kolonne (1) wurde über Leitung (2) ein Flüssigkeitgemisch bestehend aus 44 Gew.-% 1-Butanol, 40,6 Gew.-% Perchlorethylen, 14,2 Gew.-% Wasser und 1,2 Gew.-% Butylchlorid zugeführt. Die Zusammensetzung der einzelnen Ströme kann man Tabelle 1 entnehmen.

Die Glaskolonne (1) mit einem Durchmesser von 43 mm verfügte über 20 theoretische Stufen und war mit einer Gewebepackung des Typs CY der Fa. Sulzer Chemtech AG, Winterthur, gepackt. Das Rücklaufverhältnis der organischen Phase betrug 30. Man betrieb die Säule bei einem Kopfdruck von 1 bar. Die Sumpftemperatur lag bei 104 °C und die Kopftemperatur betrug 69 °C. Der Zulauf (2) der Säule lag etwa in der Mitte der Säule auf dem 2. Packungselement auf Stufe 10. Der Zulauf des Rückstroms (5) erfolgte auf den Kopf des 4. Packungselementes. Der Abzug des Stroms (18) erfolgte in der Mitte des unteren Kolonnenabschnitts (Abtriebsteil) vom unteren Ende des 2. Packungselementes. Der Abzug des Stroms (12) erfolgte in der Mitte des oberen Kolonnenabschnitts (Verstärkungsteil) vom unteren Ende des obersten Packungselementes.

**Tabelle 1**

| | Strom 2 | Strom 11 | Strom 16 | Strom 22 | Strom 4 | Strom 5 |
|---|---|---|---|---|---|---|
| Massenstrom (g/h) | 864,5 | 3,5 | 356 | 481 | 24 | 2978 |
| n-Butanol (Gew.-%) | 44 | - | 0,6 | 78,5 | 200 ppm | 200 ppm |
| Perchlorethylen (Gew.-%) | 40,6 | 1 | 97,6 | 0,9 | - | - |
| Wasser (Gew.-%) | 14,2 | 100 ppm | 200 ppm | 20,5 | 100 | 100 |
| Butylchlorid (Gew.-%) | 1,2 | 99 | 1,8 | 0,1 | - | - |

### Beispiel 2

Es wurde eine Anlage verwendet, wie sie in Fig. 3 dargestellt ist.

Der Glaskolonne (1) wurde über Leitung (2) ein Flüssigkeitsgemisch bestehend aus 44 Gew.-% 1-Butanol, 40,6 Gew.-% Perchlorethylen, 14,2 Gew.-% Wasser und 1,2 Gew.-% Butylchlorid zugeführt. Die Zusammensetzung der einzelnen Ströme kann man Tabelle 2 entnehmen.

Die Glaskolonne (1) mit einem Durchmesser von 30 mm und war mit 45 Glockenböden ausgestattet. Das Rücklaufverhältnis der organischen Phase betrug 30. Man betrieb die Säule bei einem Kopfdruck von 1 bar. Die Sumpftemperatur lag bei 101,5 °C und die Kopftemperatur betrug 68 °C. Der Zulauf (2) der Säule lag etwa in der Mitte der Säule auf Stufe 20. Der Zulauf des Rückstroms (5) erfolgte auf den obersten Boden.

**Tabelle 2**

| | Strom 2 | Strom 11 | Strom 16 | Strom 22 | Strom 17 | Strom 4 | Strom 5 |
|---|---|---|---|---|---|---|---|
| Massenstrom (g/h) | 864,5 | 3,5 | 354 | 483 | 20 | 24 | 2978 |
| n-Butanol (Gew.-%) | 44 | - | 0,3 | 78,5 | 0,3 | 200 ppm | 200 ppm |
| Perchlorethylen (Gew.-%) | 40,6 | 1 | 97,9 | 0,9 | 97,9 | - | - |
| Wasser (Gew.-%) | 14,2 | 100 ppm | 200 ppm | 20,5 | 200 ppm | 100 | 100 |
| Butylchlorid (Gew.-%) | 1,2 | 99 | 1,8 | 0,1 | 1,8 | - | - |

## Patentansprüche

1. Verfahren zur Trennung eines flüssigen Gemisches wenigstens zweier ein Azeotrop miteinander bildender Komponenten A und B und gegebenenfalls weiterer Komponenten, bei dem man
i) das zu trennende Gemisch in Gegenwart eines Hilfsstoffs H destilliert, welcher mit jeder der beiden Komponenten A und B ein niedriger als H siedendes binäres Azeotrop AH bzw. BH bildet, und
ii) eine gegenüber dem zu trennenden Gemisch B-abgereicherte A,H enthaltende Fraktion und eine gegenüber dem zu trennenden Gemisch A-abgereicherte B,H enthaltende Fraktion gewinnt.

2. Verfahren nach Anspruch 1, wobei der Hilfsstoff H zusätzlich mit den Komponenten A und B ein ternäres Azeotrop zu bilden vermag.

3. Verfahren nach Anspruch 1 oder 2, bei dem man das zu trennende Gemisch zur Destillation kontinuierlich in eine Kolonne einführt.

4. Verfahren nach Anspruch 3, bei dem man den Hilfsstoff zumindest teilweise gemeinsam mit dem zu trennenden Gemisch in die Kolonne einführt.

5. Verfahren nach Anspruch 3 oder 4, bei dem man den Hilfsstoff H zumindest teilweise am Kopf und/oder im oberen Bereich der Kolonne aufgibt.

6. Verfahren nach Anspruch 5, bei dem der Hilfstoff H als Sumpfprodukt anfällt und zumindest teilweise an den Kopf und/oder in den oberen Bereich der Kolonne zurückgeführt wird.

7. Verfahren nach einem der Ansprüche 3 bis 6, bei dem man die A,H enthaltende Fraktion an einer Stelle oberhalb und die B,H enthaltende Fraktion an einer Stelle unterhalb des Zugabeortes des zu trennenden Gemisches abzieht.

8. Verfahren nach einem der Ansprüche 5 bis 7, wobei der Massenstrom des aufgegebenen Hilfsstoffs H das 0,5- bis 15fache des Massenstroms des zu trennenden Gemisches, bezogen auf den von H verschiedenen Anteil, beträgt.

9. Verfahren nach einem der vorherigen Ansprüche, wobei es sich bei dem binären Azeotrop AH und/oder BH um ein Heteroazeotrop handelt.

10. Verfahren nach Anspruch 9, bei dem man die flüssig vorliegende oder verflüssigte A,H enthaltende und/oder B,H enthaltende Fraktion einer Phasentrennung in eine A- bzw. B-reiche Phase und eine H-reiche Phase unterwirft und die H-reiche Phase zurück in die Kolonne führt.

11. Verfahren nach einem der vorhergehenden Ansprüche, bei dem es sich bei dem zu trennenden Gemisch um ein eine unter Chlorkohlenwasserstoffen und C₆-C₁₀-Einkernaromaten ausgewählte erste Komponente und eine unter C₃-C₈-Alkanolen ausgewählte zweite Komponente umfassendes Gemisch handelt, und man als Hilfsstoff Wasser verwendet.

12. Verfahren nach Anspruch 11, bei dem es sich bei dem Chlorkohlenwasserstoff um Perchlorethylen und bei dem Alkanol um n-Butanol handelt und das Gemisch gegebenenfalls Butylchlorid enthält.

13. Verfahren nach Anspruch 12, wobei man die verflüssigte n-Butanol/Wasser-Fraktion einer Phasentrennung in eine n-Butanol-reiche Phase und eine wasserreiche Phase unterwirft und die n-Butanol-reiche Phase destillativ in eine n-Butanol-angereicherte Fraktion und eine n-Butanol-abgereicherte Fraktion trennt.

14. Verfahren nach Anspruch 12 oder 13, wobei man zusätzlich eine von Perchlorethylen und n-Butanol weitgehend freie, Butylchlorid und Wasser enthaltende Fraktion als niedrigstsiedende Fraktion gewinnt.

15. Verfahren nach Anspruch 11 bis 14, wobei der Hilfsstoff H zusätzlich eine Base enthält.
